# EUROPEAN PATENT APPLICATION

(11) **EP 2 591 904 A1**
(43) Date of publication of application: **15.05.2013**
(21) Application number: 12191167.1
(22) Date of filing: 02.11.2012
(51) Int. Cl.: B29C 47/10, G02C 13/00

(54) **Dry wipe for dry cleaning vitreous surfaces**

(30) Priority: 10.11.2011 IT BS20110154
(71) Applicant: Plastik Textile S.p.a., 24061 Albano S. Alessandro (Bergamo) (IT)
(72) Inventor: Cattaneo, Gianangelo, 24061 Albano Sant' Alessandro (BG) (IT)
(74) Representative: Pes, Matteo

(57) **Abstract**

It is described a dry wipe for dry cleaning vitreous surfaces and the like comprising at least one film (1) made of plastic material (2) additivated with mineral fillers (3). The film is characterized by the presence of micro-cavities (4) in the plastic material (2) in the proximity of the mineral fillers (3). Preferably the plastic material is selected in the group comprising polyester, polyethylene and polypropylene or combinations thereof, and the mineral fillers are selected in the group comprising calcium carbonate, talc, zeolite or combinations thereof. Advantageously the wipe structure is simple and cost effective to manufacture; everyone can use easily the wipe for cleaning effectively the surfaces.

## Description

### Field of the Invention

The present invention generally concerns the field of the cleaning of surfaces, and in particular it has the object of a dry wipe for drycleaning vitreous surfaces, or the like.

### State of the Art

Textiles, clothes and films, typically having the shape of a strip or cloth, used for dry cleaning vitreous surfaces or the like, are known. Usually such textiles or similar, hereinafter generically named *wipes,* allow to wash off the dirt present on the vitreous surface, for example dust, grease or other material extraneous to the surface itself, by a mechanical rubbing action determining the passing of the dirt from the vitreous surface to the textile.

A mostly known example is certainly constituted of humidified clothes, that is soaked with a liquid detergent, and clothes made of silk, lycra or synthetic material for cleaning the glasses.

Other examples of support for dry cleaning vitreous surfaces are described in documents DE 20314102 and DE 4334783.

However the Applicant found that the known wipes are not free of drawbacks and can be improved in some respects.

In particular, the Applicant found that current wipes are characterized by a limited effectiveness in dry cleaning vitreous surfaces, particularly if they are considerably dirty, and such an ineffectiveness can be more definite in case wherein the dirt is not only rested on the vitreous surface but also adhering thereto; that is usual and typical in case of dirt comprising greasy or oily material, for example human sweat, cosmetics, etc.

Further the Applicant found how these current wipes can leave marks due to an incomplete removal of dirt, the latter being "spread" on the vitreous surface, and/ or can incise small scratches or scrapes in the vitreous surface.

Further drawbacks of known wipes are for example the high manufacturing costs, and/ or difficulties of implementation and/ or difficulties in cleaning the wipe itself after a cleaning operation. In addition, known wipes typically have great thickness and/ or weight.

It is convenient to focus just on weight of conventional wipes. Although a single wipe can have a weight comprised between 20 and 50 grams, packs of hundreds of wipes have a considerable weight requiring attention by the packaging, logistics and safety operators in manufacturing plants.

### Objects and summary of the invention

Therefore object of the present invention, in its various aspects and/ or embodiments, is to provide a dry wipe for dry cleaning a vitreous surface, or the like, which is able to compensate for one or more mentioned drawbacks.

In particular, object of the present invention, is to provide a dry wipe which allows obtaining an effective and simple dry cleaning of vitreous surfaces and the like.

A further object of the present invention is to provide a dry wipe for dry cleaning vitreous surfaces and the like characterized by a simple and lightweight structure and cost effective to manufacture with batch or continuous industrial processes.

### Description of the invention

These and other objects are obtained by a dry (not wet) wipe for dry cleaning vitreous surfaces and the like having the technical specifications contained in one or more of the attached claims, each of which taken alone (without the corresponding dependencies) or in any combination with the other claims, as well as according to the following aspects and/or exemplary embodiments, variously matched, even with the afore said claims.

Therefore one of the aspects of the present invention relates to a dry wipe according to the claim 1.

In particular the present invention concerns a wipe for dry cleaning vitreous surfaces and the like composed of at least one film made of plastic material additivated with mineral fillers.

In the scope of the present description, with the term "wipe" is intended generally a thin and deformable strip, band or stripe which is conceptually similar to a cloth, textile, fabric or rag adapted to be used for cleaning a surface. The wipe has then a leaf-like shape, with two main dimensions and a third constituted by the thin thickness.

With the term "cleaning" is identified an operation by which a surface is intended to be cleaned from dirt and every substance extraneous thereto. In particular, the "dry" cleaning does not provide the use of water or other cleaning liquid, nor any detergent.

With the expression "vitreous surface" is intended any glass or crystal surface. More in detail, the wipe object of the present invention is adapted particularly for cleaning eyeglass lenses, lenses for optical measuring instrumentation, photographic lenses, lenses for industrial instruments, solar lenses, glasses in building, mirrors, glasses for transport means, etc.

In the scope of the present invention, also surfaces in materials different from glass, but anyway smooth, solid or not-pliable, could be considered vitreous surfaces; this is the case, for example, of plastic, metal, particularly if chromium-plated, stone or glass-like material (for example poly(methyl methacrylate). Generally, the wipe object of the present invention is adapted for cleaning materials having a surface roughness comparable to the glass roughness.

With the term "additivate" is intended the operation of adding one or more additives to a starting substance or composite, that is one or more chemical composites able to join to the starting substance/ composite and to improve its physical, and/ or chemical and/ or mechanical characteristics based on intended goals.

In the preferred embodiment of the present invention, the plastic material of the film is selected in the group comprising polyester, polyethylene and polypropylene or combinations thereof.

Preferably, mineral fillers are selected in the group comprising calcium carbonate, talc, zeolite or combinations thereof.

Advantageously the wipe structure according to the present invention is simple and cost effective to manufacture; everyone can use easily the wipe for cleaning effectively the surfaces.

The Applicant considers, knowing it for the first time too, that the presence of mineral fillers combined with a plastic film allows acting on a vitreous surface with a double action, that is to combine a chemical and/ physical action similar to an absorption of dirty particles to be removed (in particular greasy particles) by means of mineral fillers to a mechanical rubbing action of the surface by means of the whole wipe, in particular of mineral fillers.

Therefore the wipe remains dry and in spite of this feature it has a great cleaning capacity for vitreous surfaces and the like. In other words with the wipe of the invention a deep cleaning of the treated surfaces is obtained, avoiding the formation of marks or the use of cleaning liquid or foam. This allows canceling the time usually required by wet conventional supports to dry the cleaning liquid on the treated surface and rendering such a surface immediately available. Generally the wipe according to the present invention allows minimizing the cleaning times for the same result obtained with conventional solutions.

Nevertheless, the described wipe is lightweight, can be used several times and can be preserved and washed easily.

With respect to conventional supports, the wipe of the present invention is so much lightweight (also of 50% - 90%) to allow an important weight decrease of corresponding packs coming out from the production lines, with evident advantages about packaging, logistic and safety.

In an alternative embodiment of the present invention, the plastic material is a biopolymer or a biodegradable polymer, for example polylactic acid (PLA), polyhydroxyalkanoates (PHA) or a polymer based on cornstarch, potato starch or derivatives from sugar cane.

Preferably the plastic material is of only one type, that is not obtained combining the mentioned materials. In the same way, preferably all mineral fillers are of the same type.

The film object of the present invention is preferably obtained by an extrusion process and subsequently stretched, as hereinafter described.

### Brief description of the figures

Further characteristics and advantages will be more evident from the detailed description of a wipe according to the present invention. Such a description will be set forth hereinbelow referring to the attached drawings, only provided for indicative purpose and, therefore, not limitative, wherein:
- figure 1 is an electron microscope picture of a wipe portion according to the present invention, which is magnified 500 times with respect to real dimensions;
- figure 2 is an electron microscope picture of a wipe portion of fig. 1, further magnified;

- figure 3 is an electron microscope picture of a wipe portion of fig. 1, which is magnified 4000 times with respect to real dimensions;
- figure 4 is a perspective schematic representation of a possible embodiment of a wipe in accordance with the present invention.

### Detailed description of the invention

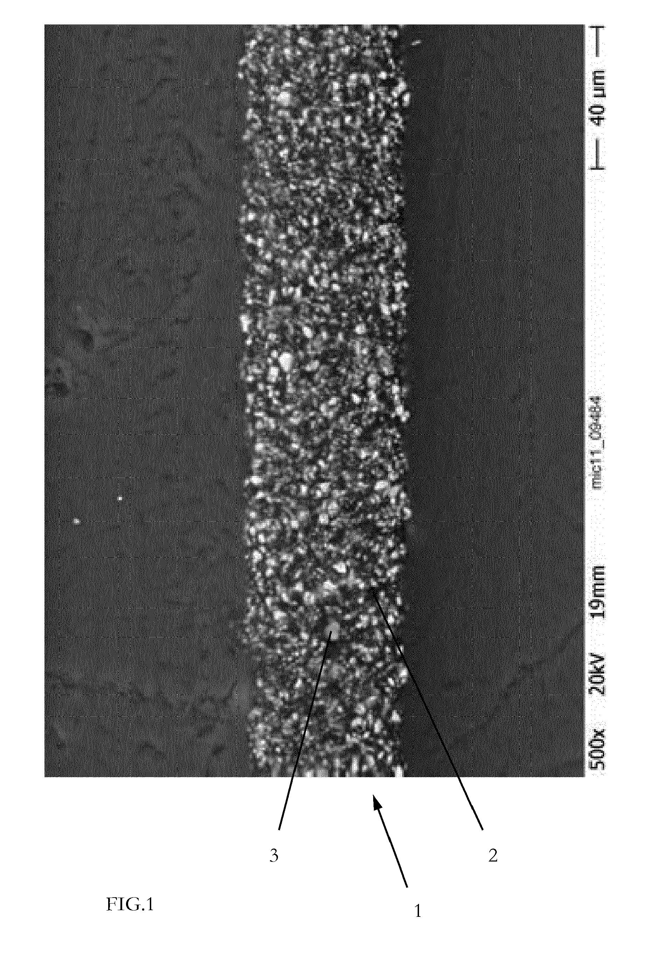

Figures 1- 3 refer to material used to form the dry wipe. The extrusion allows mixing, during the formation, plastic material and mineral fillers inside the film, whereas the stretching, that is the forced extension of the extruded film, gives the film determined characteristics useful to obtain a wipe which can implement intended objects.

In particular during the stretching, the plastic material inside the film is extended and oriented along the stretching direction, whereas the mineral fillers can not be stretched, because they are inert, rigid. This opposite behavior of the two film components causes micro-cracks of plastic material at points in which mineral fillers are; in practice the mineral filler is a localized discontinuity which avoids the extension of plastic material locally, then the latter will break.

Such a phenomenon is well visible in figures 1 - 3. In detail in figure 1 a film section is shown, indicated with numeral 1, in which mineral fillers 3 are in white, distributed in the film and having different dimensions in a diameter range. Around each filler a micro-cavity, hole and recess presence is observed, having a darker color, indicated in general with numeral 4, and with a variable dimension between a fraction of diameter of mineral filler and some multiples of diameter of mineral filler.

All around mineral fillers and micro-cavities a plastic material 2 is distributed, which makes a substrate to which the fillers are bonded.

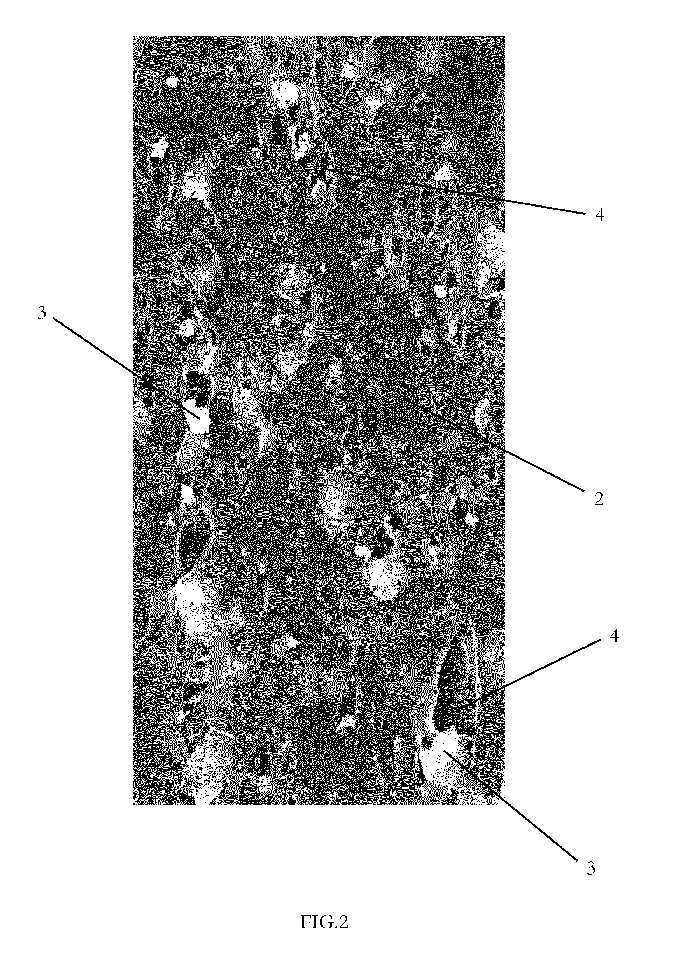

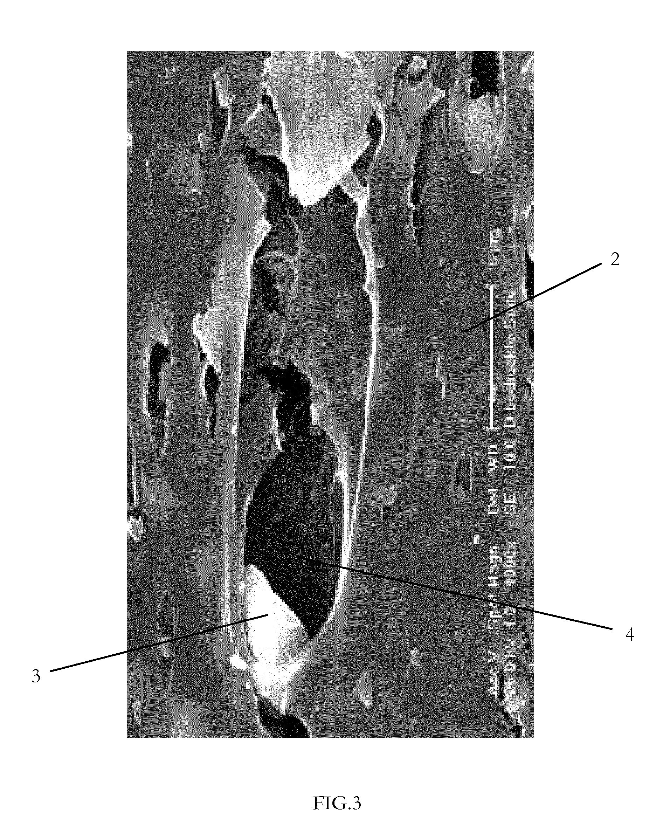

Increasing the magnification, in figure 2 and 3 the microscopical film structure can be observed more in detail. In particular, the afore said stretching causes a "tear" of plastic material, which is torn and frayed at the mineral fillers.

In substance, the stretching result is a porous structure, that is a structure provided with an alternation of solid material and micro-cavities. The Applicant verified that is the porosity itself to give the film an effective cleaning action; in fact the micro-cavities of the film attract the greasy particles in their inside, which penetrate easily therein. Further the presence of mineral fillers around and inside the cavities themselves, able to attract and maintain the greasy particles attached thereto, aids the entrance and the permanency of particles in the cavities.

In a similar way also particles containing water are attracted and "captured" by mineral fillers, because of their great hygroscopicity.

It has to be observed that, because of the stretching, the film is not pierced anywhere (that is provided with openings crossing the film), but it is thinner in some points because of the micro-cavities distributed thereon. The result is a waterproof and liquid-proof film but, at the same time, breathable to gases, thanks to passages provided by micro-cavities in its whole structure.

Ultimately, the film is characterized by the presence of micro-cavities in the plastic material at the mineral fillers, such to implement a micro-porous structure.

The Applicant checked the film porosity by the execution of breathability test, that is tests intended to measure the water vapor transmission rate through the film. The breathability measure gives indirectly an information of the porosity level of the material.

The breathability test has been carried out according to standard method ASTM D-6701 with MOCON Permatran W 100k instrument; the parameters of test execution are a temperature of 37.8°C +/- 10°C and a relative humidity of 60% +/-10%. Results bring out the fact that the wipe object of the present invention preferably has a breathability value comprises between about 1500 and about 12000 MOCON.

Preferably the film has a substantially homogeneous composition, that is the mineral fillers are distributed or dispersed uniformly in the plastic material.

In a preferred embodiment of the present invention, the mineral fillers, in particular when they are granulated calcium carbonate, each comprise a respective surface coating.

Preferably, the surface coating of the fillers is a compound of the stearate class, for example stearic acid.

In this way it is possible to "round off" the surface of mineral fillers, typically sharp and cutting, rendering it uniform and smooth, for example rounded. Such a characteristic avoids the formation of agglomerates of mineral fillers in the film and further it avoids the wipe to damage or scratch the surface to be cleaned.

Advantageously the film has a preferably uniform thickness which is preferably comprised between 10 and 100 micrometers (µm).

Preferably the film has a grammage between 10 g/m² and 100 g/m², just for example equal to about 25 g/m².

By way of example, 98 weight percent of the afore said mineral fillers has a diameter smaller than 8 µm. Alternatively 50 weight percent of mineral fillers has an average diameter comprises between 0,5 and 2 µm.

In an aspect of the present invention, the wipe comprises an additional layer constrained to the film. Preferably said additional layer is a textile, fabric, hide or nonwoven fabric portion or the like. The additional layer is partially constrained to both sides of the film, letting a portion thereof emerge or, alternatively, it is advantageously constrained to one side of the film completely. The additional layer allows obtaining a wipe having a greater stiffness, mechanical strength and/ or handiness; this could be useful to avoid the incidental film damaging and to increase the useful life thereof, and further it facilitates the handling thereof. Again, the possibility of constraining different additional layers to the film allows selecting, changing and customizing the external appearance of the wipe.

The additional layer can be constrained to the film by gluing, seaming, hot or ultrasound calendering.

Preferably the wipe, provided or not with the additional layer, may be printed and/ or embossed and/ or colored on one or both sides.

Preferably the film may be slightly treated on surface with high - frequency discharges, so that to aid inks, stickers or coatings to adhere thereon and/ or to increase the capacity of the wipe to attract and remove dirt from the surface to be cleaned.

As an example, the wipe can have a substantially squared shape (for example with a side of 100 mm or 200 mm), rectangular, polygonal, circular, etc.

In an independent aspect thereof, the present invention concerns a method for implementing a wipe for dry cleaning vitreous surfaces and the like. Such a method comprises the steps of:
(a) arranging an amount of plastic material and an amount of mineral fillers;
(b) hot extruding a film containing the plastic material and the mineral fillers, so that the mineral fillers are additivated in the plastic material and the film concurring in forming the wipe is realized.

Advantageously the step of (b) hot extruding a film is a step of co-extruding the plastic material and the mineral fillers. Alternatively, the step of (a) comprises, in its turn, the step of (c), preceding the extruding step: mixing the plastic material and the mineral fillers by combination (named in the field as "compounding").

Advantageously, in step (a) the plastic material comprises one or more materials selected in the group comprising polyester, polyethylene and polypropylene, or it can be a biopolymer or a biodegradable polymer, for example polylactic acid (PLA), polyhydroxyalkanoates (PHA) or a starch - based polymer.

Advantageously, in step (a) mineral fillers are selected from the group comprising calcium carbonate, talc, zeolite.

In a preferred embodiment the method comprises the step of (d): coating each of the mineral fillers with a respective surface coating.

Preferably, in step d) the surface coating is a compound of the stearate class, for example stearic acid.

Preferably the step (b) comprises a step of selecting the fraction of mineral fillers in weight percent based on the film weight. It is then possible to change the film composition according to needs. The Applicant verified that the percentage of mineral filler in the film can reach up to 70% of total weight.

After the extruding step, the method could comprise a step of cooling the film, for example by cold rollers or cooling air jets.

After the cooling step, the method could comprise one or more step of stretching the film, for example by rollers heated at different temperatures and rotating at different rates. This allows, as afore described, to form the afore said micro-cavities in the plastic material at the mineral fillers, such to implement a micro-porous structure.

Preferably one of the stretching steps happens at a temperature of about 80°C, able to cause the "tempering" of the film - useful for increasing its plasticity - anyway without casting the plastic material.

By way of example, the stretching step causes an extension of the film up to about 3 times with respect to the starting length.

After the stretching step, the method could comprise a further step of cooling the film. This allows blocking the stretched layer on the film, maintaining during time the just obtained length and micro-cavities.

After the extruding step and, if carried out, after the step of cooling and/ or stretching, the method could comprise a step of winding the film on a roller to form a reel and/ or cutting the extruded film in single films each one to be used to have a single wipe.

In an aspect the method comprises a step of constraining an additional layer to the film. Preferably such an additional layer is a textile, fabric, hide or nonwoven fabric portion or the like. The additional layer is partially constrained to both sides of the film, letting a portion thereof emerge or, alternatively, it is constrained to one side of the film completely.

Preferably the step of constraining the additional layer to the film is carried out by gluing or ultrasound coupling, the additional layer being preferably nonwoven (spunbonded, thermobonded, carded) fabrics.

Alternatively, the step of constraining the additional layer to the film happens by extrusion of the coating ("extrusion coating" or "co-extrusion") or heat calendering. Still alternatively, the constraining step happens by coupling and stretching with an intermeshing cylinder system.

Preferably the method comprises, after the extruding step, a step of printing and/ embossing and/ or coloring the film and/ or the additional layer, on one or both sides.

Preferably the method comprises a step of treating the film surface with high - frequency discharges, for example by electrifier bars or ionizing processes ("corona treatment"). This allows increasing the adhesion of inks, stickers or coatings on the film surface.

In general, it is possible to realize the wipe object of the present invention, as afore described, in every shape and dimension, according to needs. For example, the reel may have a length of about 200 mm and a length comprised between 30 m and 1000 m.

In the preferred embodiment, the wipe according to the present invention is provided with the following characteristics:
- it comprises a squared portion of film in polyethylene charged with mineral fillers of calcium carbonate;
- the grammage of the film is equal to about 40 g/m²;
- the thickness of the film is about 40 - 50 µm;
- mineral fillers are uniformly distributed on the film mass;
- mineral fillers are coated with stearic acid;
- the mass percentage of mineral fillers is equal to 40% with respect to the whole mass of the wipe, a possible addition layer not being included;
- the average diameter of the calcium carbonate fillers is of about 6 µm;
- the wipe comprises an additional layer made of nonwoven fabric constrained to only one side of the film.

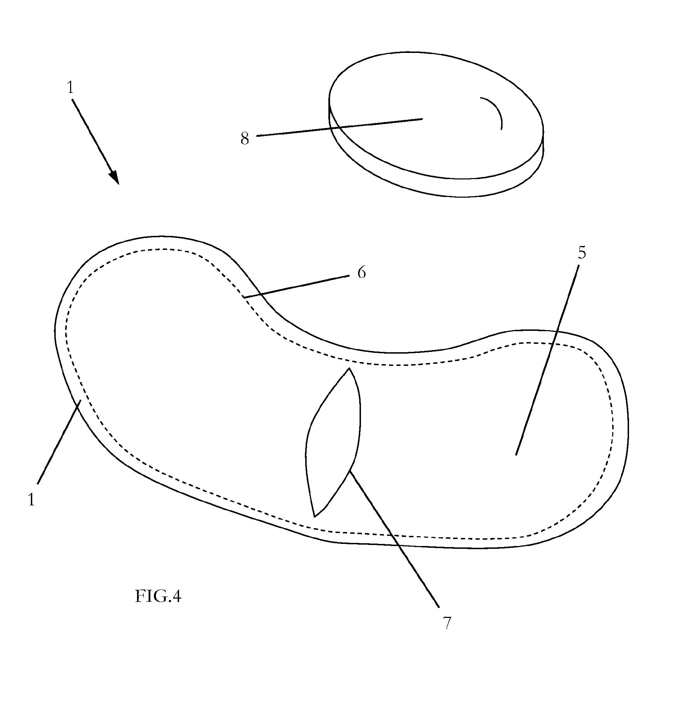

Figure 4 shows a further possible embodiment of the wipe object of the present invention. In such an embodiment, the wipe comprises a continuous film 1 having a determined shape and an additional layer 5, for example made of fabric, having preferably the same shape of the film. The additional layer is overlapped to a side of the film and constrained thereto at the perimeter, for example by a seam 6 or a glue strip, leaving unconstrained the inner portion surrounded by the perimeter. Further, the additional layer comprises a cut 7 passing the layer itself in its portion inside the constrained perimeter and not communicating with such a perimeter. Preferably, the cut is interposed between two opposite portions of the constrained perimeter.

The cut allows a user to put two or three fingers, preferably the thumb and the first finger and/ or the middle finger and/ or the ring finger, into the space between the film and the additional layer. Afterwards with the same fingers, wrapped by the wipe, the user catches the object 8 to be cleaned, the latter contacting the cleaning film (in figure the object to be cleaned is for example a lens). Then, by rubbing of the fingers, the user cleans the object surface simply and rapidly. In other words the wipe of figure 4 implements a kind of "finger glove" by which it is possible to catch and directly clean an object having a vitreous surface or the like.

## Claims

1. Dry wipe for dry cleaning vitreous surfaces and the like composed of a film (1) made of plastic material (2) additivated with mineral fillers (3).

2. Wipe according to claim 1, wherein the film (1) is **characterized by** the presence of micro-cavities (4) in the plastic material (2) in the proximity of the mineral fillers (3).

3. Wipe according to claim 1 or 2, wherein said plastic material (2) is selected from the group comprising polyester, polyethylene and polypropylene.

4. Wipe according to claim 1 or 2, wherein said plastic material (2) is a biopolymer or a biodegradable polymer, for example polylactic acid (PLA), polyhydroxyalkanoates (PHA) or a starch - based polymer.

5. Wipe according to any one of the claims 1 - 4, wherein said mineral fillers (3) are selected from the group comprising calcium carbonate, talc, zeolite.

6. Wipe according to any one of the preceding claims, wherein said plastic material (2) is of single type and/ or all mineral fillers (3) are of the same single type.

7. Wipe according to any one of the preceding claims, wherein the afore said film (1) has a substantially homogeneous composition.

8. Wipe according to any one of the preceding claims, wherein the afore said mineral fillers (3) each comprise a respective surface coating made up of a compound of the stearate class, for example stearic acid.

9. Wipe according to any one of the preceding claims, wherein said film (1) has a thickness comprised between 10 and 100 micrometers (µm) and a grammage between 10 g/m² and 100 g/m².

10. Wipe according to any one of the preceding claims comprising an additional layer (5) partially or completely constrained to one or both sides of the film (1), said additional layer being a textile, fabric, hide or nonwoven fabric portion.

11. Wipe according to any one of the preceding claims comprising one or more printed patterns and / or embossing on one or both sides.

12. Wipe according to claim 10 or 11, comprising the afore said film (1), continuous and provided with a given shape, and said additional layer (5), wherein the additional layer is overlapped at one side of the film and it is constrained perpendicularly thereto, by a seam (6) or other fixing means, leaving unconstrained the inner portion surrounded by the perimeter, and wherein the additional layer (5) comprises a cut (7) passing the layer itself in a portion of it inside the constrained perimeter and not communicating with such a perimeter.

13. Use of a wipe according to any one of the claims 1 - 12 for dry cleaning vitreous surfaces such as eyeglass lenses, lenses for optical measuring instrumentation, photographic lenses, lenses for industrial instruments, solar lenses, glasses in building, mirrors, glasses for transport means, or surfaces of material similar to glass.
